# EUROPEAN PATENT SPECIFICATION

(11) **EP 2 559 663 B1**
(45) Date of publication and mention of the grant of the patent: **06.11.2019**
(21) Application number: 11768293.0
(22) Date of filing: 14.04.2011
(51) Int. Cl.: C02F 1/24, C02F 1/74, C02F 1/78, C02F 7/00, C02F 1/52, C02F 1/72

(54) **METHOD FOR REMOVING POLLUTING SUBSTANCES FROM WATER STREAMS BY OXYGEN INJECTION IN A FLOTATION BASIN**
VERFAHREN ZUR ENTFERNUNG VERUNREINIGENDER SUBSTANZEN AUS WASSERSTRÖMEN DURCH SAUERSTOFFINJEKTION IN EIN SCHWIMMBECKEN
PROCÉDÉ D'ÉLIMINATION DE SUBSTANCES POLLUANTES DE COURS D'EAU PAR INJECTION D'OXYGÈNE DANS UN BASSIN DE FLOTTATION

(30) Priority: 15.04.2010 BR PI1001307
(43) Date of publication of application: 20.02.2013
(73) Proprietor: Gomes De Oliveira, João Carlos, Barueri - SP, Cep: 06473-065 (BR); Gomes De Oliveira Netto, Procópio, Barueri - SP (BR); Gomes Oliveira, Felipe, Barueri - SP (BR)
(72) Inventor: Gomes De Oliveira, João Carlos, Barueri - SP, Cep: 06473-065 (BR); Gomes De Oliveira Netto, Procópio, Barueri - SP (BR); Gomes Oliveira, Felipe, Barueri - SP (BR)
(74) Representative: Hirsch & Associés
(86) International application number: PCT/BR2011/000110
(87) International publication number: WO 2011/127547

(56) References cited:
- EP-A2- 1 481 948
- WO-A1-2005/058762
- WO-A1-2011/026758
- WO-A2-2006/127979
- BR-A- 9 301 072
- BR-A- 9 702 430
- JP-A- 2002 066 539
- JP-A- 2008 296 097
- US-A- 3 470 091
- US-A- 6 126 842
- US-A1- 2003 085 176
- US-A1- 2006 263 281
- US-A1- 2009 277 822

## Description

### Disclosure of the Invention

The present disclosure is directed to the injection of oxygen dissolved in water to the flotation basin in a process of removing pollutants and suspended organic substance from water streams that have been polluted either by untreated effluents poured down on same or by waste carried by the rain and/or present in water treatment plants and/or sewer treatment plants, by means of flotation plants submitted to a high degree of oxygen concentration ranging from 50% to 95%, depending on the needs.

It is widely known that water streams in large urban centers have a high deterioration rate that affects the surrounding environment around such large urban centers and spreads over a long extension of water streams located downstream the urban center. This phenomenon derives from the formation, development and demographic growth that create and aggravate the sanitary problems that could be dealt with more easily in small urban centers through the implementation of single systems or even small collective treatment systems. However, in greatly populated centers the solutions indicated for single systems cannot be adopted, since the availability of areas in the urban lots and the sanitary deposition capability are not enough to the burden generated by liquid and solid wastes.

The excessive sanitary deposition of such litter and waste waters that are launched directly onto water streams does not allow the occurrence of the so-called self-purification phenomenon, thus turning rivers, lakes and reservoirs in large urban centers into huge sewers. In WO2005/058762, an installation is mentioned for removal of pollutants, where aeration of the watercourse bed is one of the stages of the process. In WO2006/127979, a system and method of dissolving different gases in a fluid is treated, where among these different gases oxygen is mentioned. In EP 1481948 A2, the coupling of a sewage treatment plant in a flocculation and flotation treatment plant is mentioned, where the stage of aerating the river bed is one of the phases of this installation. In WO2011/026758 A1, a method of purifying water flowing in a river or canal is treated, making such water potable. US2009/277822 A1, consists of a modular and variable process for treating a watercourse which has a step of aerating the water bed under treatment.In US2006/0263281 A1, a treatment method for the disposal of microorganisms by the application of an oxygen/ ozone mixture is addressed. US2003/085176 discloses a process of environmental recovery in urban regions that acts along the entire watercourse mesh of an urban region, from the canalized domestic course of sewerage systems to the urban sections of riverbed.

For the purpose of improving the sanitary economic and social conditions of the population affected by such problems, the applicant has developed a system that, by removing pollutants present in the water stream itself, has made it possible to: eliminate offensive aspects related to the aesthetic sense, as well as bad smells; exploit water resources for future reuse; implement and develop industries; use urban water streams as recreational and sports areas; and protect natural water resources from extreme pollution and maintain same in fully useful conditions.

The system developed does not fulfill the sewer collection, removal and treatment needs, but makes it possible to retain and remove wastes launched onto water streams to treatment sites, thus preventing the deterioration thereof in regions lacking an efficient waste collecting network.

The system developed and used by the applicant consists of a process for removing pollutants and/or polluting matter present in water streams object of patent PI9702430-9, dated 07/11/1997, that comprises the application of a flocculating or coagulating material to a portion of the water stream to be treated; creating a flocculation basin along said water stream so that suspended particles may aggregate downstream same, thus generating larger flakes. The injection of oxygen consists of submitting said aggregate particles with higher dimension and density located downstream said portion of the water stream to at least one step of dissolving and injecting oxygen from a concentration plant, then directing same to dissolving plants through pressurized mixers, thus forming a water/oxygen mixture to be injected to portions of the water stream, causing said aggregate particles to float; creating a flotation basin along said portion of the water stream so that the floated material may agglomerate downstream same, said floated and agglomerated material that is present downstream on the surface and by the banks of the water stream being removed by scraping the surface of the water stream.

Despite the fact that this process known as a water stream flotation process may be applied satisfactorily, a significant volume of treated water should be recirculated upstream the spot on the water stream where the flotation basin is defined and where the air injection is carried out by dissolution.

Said circulation of treated water should be carried out at a high rate, thus increasing the cost of the operation, as well as the cost of the equipment and installations for performing the recirculation.

It is known that the efficiency of the injection when use is made only of the surrounding air with a concentration of about 78% nitrogen and 21% oxygen is dependent on the solubilization of the oxygen fraction, that on its turn is about 2.5 more soluble in water than nitrogen.

Thus, one of the objects of the present application is to provide an injection of pure oxygen, concentrated or mixed with atmospheric air, dissolved in the recirculation water, to a flotation basin in a process of removing pollutants and also suspended organic matter present in water streams and/or water treatment plants and/or sewer treatment plants, among others, that promotes a 70% - 80% reduction of the water recirculation water outflow and a more efficient water/oxygen mixture by the mixers as a function of the higher oxygen solubility in the water, thus reducing the costs of the process and equipment for accomplishing and operating same, consequently reducing the consumption of electric power by about 70% in the whole process.

Another object of the present application is to provide an injection of oxygen dissolved in water to a flotation basin in the process of removing pollutants and suspended organic matter present in water streams that does not require any work for creating a complex circuit for recirculating part of the water treated for the flotation basin where the water/oxygen mixture is injected to.

Another object of the present application is to provide an injection of oxygen to the flotation basin in a process of removing pollutants and suspended organic matter present in water streams at a low implementation cost, so that it is possible to adapt same to any type of water stream and/or water treatment plants and/or sewer treatment plants.

Another object of the present application is also provide an injection of oxygen to the flotation basin in a process of removing pollutants and suspended organic matter present in water streams that makes it possible to attain a significant increase in the removal of pollutants dissolved in the water that oxidize in the massive presence of oxygen and turn into particulates in the form of oxides and are removed by flotation.

Another object of the present application is to provide an injection of oxygen to a flotation basin in the process of removing pollutants and suspended organic matter present in water streams, whose implementation is easy and fast, only requiring minor adaptations to the installation site along the water stream and/or to water treatment plants and/or sewer treatment plants.

Another object of the present application is to carry out an injection of ozone to a flotation basin in a process for removing pollutants and suspended organic matter in water streams that makes it possible to disinfect the effluent treated through the transformation of the oxygen generated by the process into ozone and the dissolution thereof in the water afterwards.

Another object of the present application is to provide an injection of oxygen and nearly pure ozone to a flotation basin in a process of removing pollutants and suspended organic matter present in water streams that promotes a significant increase in the removal of ammoniacal nitrogen in the massive presence of the oxygen and specially nearly pure ozone by oxidizing same.

Another object of the present application is to provide an injection of oxygen in a flotation basin in the process of removing pollutants and suspended organic matter present in water streams that promotes a significant increment in the removal of all the other pollutants indicative of the quality of the water and the launching and/or emission standards of treated effluents.

Another object of the present application is to provide an injection of oxygen in a flotation basin in the process of removing pollutants and suspended organic matter present in water streams that makes it possible to inject oxygen to any portion of the water stream upstream and/or downstream said flotation plants, in order to oxidize the pollutants through the formation of particulate oxides and the consequence removal thereof afterwards, thus also making it possible to maintain the suitable levels of oxygen dissolved along the water stream.

These objects and advantages of the present application are attained by a process of removing pollutants from a water course according to claim 1.

The importance of the oxygen in the treatment of polluted water is known in connection with the oxidation of organic matter and other substances, thus the application thereof to the treatment of effluent is greatly advantageous, providing an additional reduction of important water quality parameters such as DBO, nitrogen and phosphorus, and the like.

However, the production of pure oxygen or highly concentrated oxygen meant a high cost recently, contrary to what happens today when novel processes for concentrating oxygen can reduce the cost greatly.

It should be stressed out that this novel process is based on the knowledge that the oxygen is one of the gases mostly present in the atmospheric air. To accomplish this injection of oxygen dissolved in water to a flotation basin in the process of removing pollutants and suspended organic matter present in water streams and/or water treatment plants and/or sewer treatment plants, an oxygen source is required that can be defined by oxygen reservoirs also known as oxygen cylinders or by processes provided with concentration plants that use pressure change or vacuum.

The production of oxygen through processes using concentration plants using the pressure change is attained by an oxygen producing plant that makes it possible to separate oxygen from the ambient air by using molecular sieves at a concentration of about 95%.

Another way of producing oxygen is the process of applying vacuum to molecular sieves. Thus, by simply injecting ambient air into the concentrator, concomitantly with the activation of the vacuum pump to provide the regeneration of the molecular sieves and the purges of the adsorbed components, it is possible to obtain pure oxygen or highly purified oxygen. Despite being more expensive than the process that uses the pressure change, this solution is viable in larger plants.

Therefore, by injecting pure oxygen, either concentrated or mixed with atmospheric air, to the flotation stage that comprises the process of removing pollutants and suspended organic matter present in water streams, a significantly high efficient process of recovering polluted water is provided, since the plant for generating concentrated oxygen is placed near the flotation basins along the water stream and/or water treatment plants and/or sewer treatment plants thus making it possible to use the whole oxygen produced in the process for concentrating oxygen.

The present invention will be described below with reference to the attached drawings, for the sake of example without any limitation, wherein:

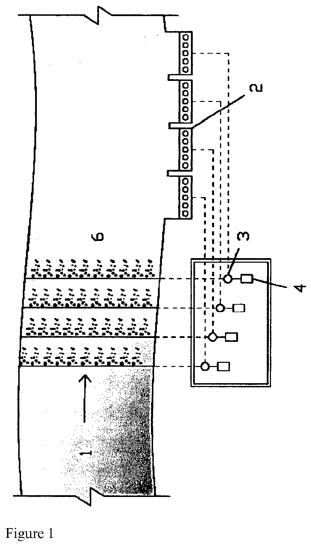

Figure 1 represents schematically a portion of a water stream submitted to the process of removing pollutants, without the oxygen injection plant; and
Figure 2 represents schematically a portion of a water stream submitted to the process of removing pollutants in combination with at least one oxygen concentrating plant to be interconnected with at least one air/oxygen dissolution plant.

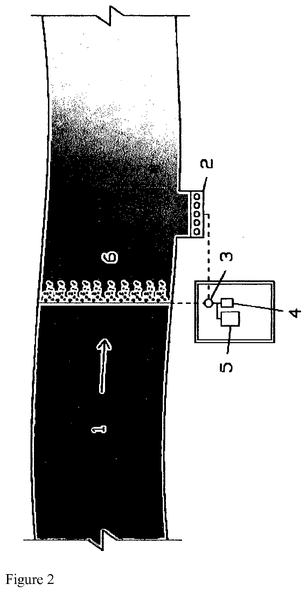

According to figure 2, the injection of oxygen to a flotation basin in the process of removing pollutants and suspended organic matter present in water streams and/or water treatment plants and/or sewer treatment plants object of the present invention, is carried out in a process comprising the steps of: applying a flocculating or coagulating agent 1 to a portion of the water stream to be treated; creating a flocculation basin along said water stream so that suspended particles may aggregate downstream same, thus generating larger flakes; submitting said larger coagulated particles partially blocked downstream said portion of the water stream to least one step of injecting oxygen from the oxygen generating plants 5 located near the flotation basins, causing the flotation of said agglomerated particles by using the whole volume of concentrated oxygen generated; an agglomeration of the material floating on the surface taking place downstream said basin, said agglomeration on its turn being carried out and concentrated on a restricted area on the banks of the water stream and/or water treatment plants and/or sewer treatment plants, where it is removed and directed to a floated material intake and compacting plant.

For accomplishing the first step of the process, the flocculating material 1 is applied. The removal of the suspended organic matter is initially carried out by adding coagulating chemicals 1 that may help to coagulate the water. Such products provide an aggregation of suspended particles after a certain time, thus forming larger denser flakes that define a flocculating basin downstream the portion of the water stream.

After the flocculating step, by installing the plant 5 for concentrating pure oxygen, concentrated oxygen or oxygen mixed with atmospheric air, the oxygen is submitted to a dissolution in treated water and launched onto the water stream, thus making it possible to inject oxygen to a flotation basin in the process of removing pollutants and suspended organic matter present in water streams, wherein the highly efficient aggregated particles float and are carried to the surface.

The process proposed herein is basically comprised of: units 2 for pumping and circulating treated water; water/oxygen mixers 3; air compressors 4; oxygen concentrating plant 5 including molecular sieves, pressure changers or vacuum pumps depending on the system used for generating oxygen.

The water outflow to be injected with oxygen is 20% - 30% of the original recirculation outflow, wherein a dissolution of the surrounding air is necessary for the oxidation and saturation of oxygen in the treated water from the water stream and/or water treatment plants and/or sewer treatment plants. Thus, the equipment should be sized in order to fulfill the needs imposed by the process, thus providing an important reduction in the recirculation outflow and therefore investments and operational costs.

For supplying the required water to the system, equipment provided with suction and reposition pumps should be used with an outflow enough to attain the optimum dosage of the oxygen admixture, so that this solution is substantially lower and cheaper than the solution containing a surrounding air mix used so far for the injection of micro-bubbles in the flotation.

The oxygen-water mixture 3 is directed to a pipe provided with diffusers transversally installed all over the bottom of the channel, thus allowing the dissolved oxygen to exit and be distributed homogeneously on the water stream and/or water treatment plants and/or sewer treatment plants. This mixture is composed of oxygen micro-bubbles that adhere to the aggregated particles, thus increasing its thrust, making it possible to perform the flotation process, so that the transfer of oxygen to the treated water is maximized.

It should be stressed out that ozone may be produced by transforming the oxygen generated by the process in the oxygen producing plant 5, said ozone being injected alone or in combination with oxygen to the flotation basin in the process of removing pollutants and suspended organic matter present in water streams, in order to also disinfect the treated effluent and a provide significant increase in the removal of ammoniacal nitrogen by oxidizing same.

After this phase, the retention of the material floating on the channel that is carried out by a floating fence installed at a predetermined distance to the place where the process is started takes place, thus allowing the whole floating mud to move to the surface when said fence is reached, consequently making it possible to capture all the floating material.

With this process of removing pollutants in water streams by means of flotation with oxygen, excellent results in the initial treatment of water streams are attained, as well as in the maintenance of such water streams, mainly those that receive residual and clandestine sewer lines; and also provides an extremely beneficial effect in the periodic and preventive treatment of water streams already submitted to the initial pollution removing treatment, bringing about a new life to water streams that are badly influenced by urban centers, as a function of the significant increase of the oxygen level dissolved in the water treated by the process disclosed herein.

## Claims

1. "PROCESS FOR REMOVING POLLUTANTS FROM A WATERCOURSE", this process being of the type understood by stages of:
applying through quick mixing flocculant or coagulant material (1) in a section of the watercourse to be treated;
allowing a basin of flocculation to emerge from this section, so that an aggregation of suspended particles occurs downstream, defining flakes of larger dimensions;
**characterized by** subjecting these aggregated particles of larger dimensions and density downstream from the watercourse to at least one dissolution and injection stage of pure oxygen coming from a concentration unit (5), and directed to dissolution units by pressurized mixers (3), forming a water/oxygen mixture with a high degree of oxygen concentration ranging from 50% to 95% to be injected into section (6) from the watercourse; allowing a floatation basin to emerge along the watercourse from this section so that an agglomeration of the float material occurs downstream, whose floated and agglomerated material is verified downstream on the surface and along the banks of the watercourse being removed by the scraping of the surface of the watercourse; being that the pure and concentrated oxygen is selectively transferred to the treated water from a watercourse, making it possible to use a water recirculation rate of 70% to 80% lower than would be necessary if environmental air were used.

## Patentansprüche

1. Verfahren zur Entfernung Verunreinigender Substanzen aus einem Wasserstrom, wobei dieses Verfahren von der Art ist, die durch folgende Stufen zu verstehen ist:
- Anwenden von Flockungs- oder Koagulationsmaterial (1) durch schnelles Mischen in einem Abschnitt des zu behandelnden Wasserstroms;
- aus diesem Abschnitt ein Flockungsbecken entstehen zu lassen, sodass stromabwärts eine Ansammlung von suspendierten Partikeln auftritt, wobei Flocken größerer Dimensionen definiert werden;
**dadurch gekennzeichnet, dass** diese angesammelten Partikel größerer Dimensionen und Dichte stromabwärts vom Wasserstrom mindestens einer Auflösungs- und Injektionsstufe von reinem Sauerstoff, der von einer Konzentrationseinheit (5) stammt, unterzogen werden, und durch Druckmischer (3) auf Auflösungseinheiten gerichtet werden, wobei ein Wasser-/Sauerstoff-Gemisch mit einer hohen Sauerstoffkonzentration im Bereich von 50% bis 95% gebildet wird, das aus dem Wasserstrom in den Abschnitt (6) injiziert wird; ein Flotationsbecken aus diesem Abschnitt entlang des Wasserstroms entsteht, sodass es stromabwärts zu einer Agglomeration des Schwimmmaterials kommt, dessen Schwimm- und Agglomerationsmaterial stromabwärts an der Oberfläche und entlang der Ufer des Wasserstroms überprüft und durch Abschaben der Oberfläche des Wasserstroms entfernt wird; da reiner und konzentrierter Sauerstoff selektiv zu dem behandelten Wasser des Wasserstroms übertragen wird, ist es möglich, eine Wasserrückführrate zu verwenden, die um 70% bis 80% niedriger ist, als notwendig wäre, wenn Umgebungsluft verwendet werden würde.

## Revendications

1. Procédé pour retirer des substances polluantes dans un cours d'eau, ce procédé étant du type compris par les étapes consistant à :
appliquer par mélange rapide un matériau floculant ou coagulant (1) dans un tronçon du cours d'eau devant être traité ;
laisser un bassin de floculation émerger de ce tronçon de façon qu'une agrégation de particules en suspension se produise en aval, définissant des flocons de plus grandes dimensions ;
**caractérisé en ce que** ces particules agrégées de plus grandes dimensions et de densité plus élevée, provenant du cours d'eau, sont soumises à au moins une étape de dissolution et d'injection d'oxygène pur provenant d'une unité de concentration (5), et dirigées vers des unités de dissolution par des mélangeurs pressurisés (3), formant un mélange eau/oxygène avec un degré élevé de concentration d'oxygène allant de 50 % à 95 % devant être injecté dans le tronçon (6) provenant du cours d'eau ; un bassin de flottation est laissé à émerger le long du cours d'eau depuis ce tronçon de façon qu'une agglomération du matériau flottant se produise en aval, lequel matériau flotté et aggloméré est vérifié en aval sur la surface et le long des berges du cours d'eau est retiré par écumage de la surface du cours d'eau ; l'oxygène pur et concentré est transféré sélectivement à l'eau traitée provenant d'un cours d'eau, rendant possible l'utilisation d'un taux de recirculation d'eau inférieur de 70 % à 80 % à ce qui serait nécessaire si de l'air environnemental était utilisé.
